# EUROPEAN PATENT SPECIFICATION

(11) **EP 4 433 537 B1**
(45) Date of publication and mention of the grant of the patent: **31.12.2025**
(21) Application number: 22802733.0
(22) Date of filing: 14.11.2022
(51) Int. Cl.: C08L 7/00, B60C 1/00

(54) **COMPOSITIONS FOR ELASTOMERIC COMPOUNDS COMPRISING A NEW SECONDARY CROSS-LINKING SYSTEM AND TIRES COMPRISING THE SAME**
ZUSAMMENSETZUNGEN FÜR ELASTOMERVERBINDUNGEN ENTHALTEND EIN NEUES SEKUNDÄRES VERKNÜPFUNGSSYSTEM UND REIFEN DIESE ENTHALTEND
COMPOSITIONS POUR DES COMPOSÉS ÉLASTOMÈRES COMPRENANT UN NOUVEAU SYSTÈME DE RÉTICULATION SECONDAIRE ET PNEUS COMPRENANT LES MÊMES

(30) Priority: 15.11.2021 IT 202100028922
(43) Date of publication of application: 25.09.2024
(73) Proprietor: Pirelli Tyre S.P.A., 20126 Milan (IT)
(72) Inventor: ROMANI, Francesco, 20126 Milano (IT)
(74) Representative: PGA S.p.A.
(86) International application number: PCT/IB2022/060910
(87) International publication number: WO 2023/084475

(56) References cited:
- EP-A1- 2 674 452
- EP-A1- 2 712 887
- US-A1- 2014 179 837

## Description

### FIELD OF THE INVENTION

The present invention relates to compositions for elastomeric compounds for tires comprising a new secondary cross-linking system comprising an agent selected from furoic acid, its esters or its salts. The present invention also relates to tire components and tires for vehicle wheels that comprise such elastomeric compound.

### PRIOR ART

In the tire industry, sulphur cross-linking (vulcanisation or primary cross-linking) is a process commonly used to improve the mechanical properties of rubbers.

In particular, sulphur cross-linking takes place following heating in the so-called vulcanisation step with the formation of sulphur-based bonds. Through vulcanisation, an elastic and not very swellable material is obtained.

Sulphur cross-linking influences the hardness, elasticity, hysteresis of the elastomeric material and, consequently, the properties and behaviour of the tire that incorporates it.

Typically, with traditional sulphur cross-linking systems, the vulcaniser and the vulcanisation additives are incorporated into the compound downstream of the production process, in controlled temperature steps, generally not exceeding 130 °C, and mixing for limited times.

The poor solubility of sulphur in elastomeric compounds together with the mild mixing conditions adopted for its incorporation mean that its dispersion is not always ideal. It follows that the final material, due to an uneven distribution of sulphur, may not have the desired properties, for example it may be characterised by a marked hysteresis, showing an increase in the heat dissipated under dynamic conditions.

Over the years, various additives have been proposed to improve the cross-linking process, such as, for example, cross-linking activators, accelerants and retardants. However, the primary cross-linking systems based on sulphur, despite the use of additives, do not always give satisfactory results. In fact, the primary lattice based on the sulphur bonds formed during the vulcanisation step is not always able to provide adequate reinforcement of the compound as these bonds are reversible and subject to breakage at high temperatures. As a consequence, the mechanical properties of the tire, in particular the properties of the tire under stress, can deteriorate.

This problem has been tackled by introducing in the elastomeric compounds some thermally more stable secondary cross-linking systems, capable of compensating for the breaking of the sulphur bonds of the primary lattice and of imparting rigidity. A conventionally used secondary cross-linking system comprises resorcinol and methylenes donor agents capable of reacting with resorcinol to form a lattice. A similar system, based on Resorcinol and Formaldehyde in latex, called the RFL system, is also widely used as an adhesive to make the reinforcing elements present in the reinforced structural elements of the tires better adhere to the rubber.

In tires for vehicle wheels, the reinforced structural elements, comprising reinforcing elements, in particular cords, perform different functions which may be structural, containment, protection.

One of the features to be checked to allow the integrity of the reinforced structural element is that the reinforcing elements adhere tenaciously to the elastomeric material that incorporates them to avoid tearing and disintegration of the composite. Typically, the materials for the reinforcing cords of the layers of the carcass structure, belt structure, and/or protection (chafer) or reinforcing (flipper) of the bead, may be, according to the positioning, the type of tire and the use, non-metallic textile or metallic materials.

The non-metallic materials most commonly used as constituents of tire cords may be naturally derived polymeric fibres such as Rayon and Lyocell, or synthetic fibres such as aliphatic polyamides (nylon), polyesters and aromatic polyamides (generally known as aramids), these materials being selected according to the component in which they will be incorporated and the type of tire (for two or four-wheeled vehicles, for heavy vehicles) and according to the required performance such as HP (high performance), UHP (ultra high performance), racing, on or off the road.

However, polymeric fibres, in particular aramids, by their nature adhere with difficulty to rubbers.

Adhesive compositions have therefore been developed in the tire sector - such as the Resorcinol - Formaldehyde - Latex (RFL) composition - which guarantee and maintain excellent adhesion of the cords to the tires, not only during the tire manufacture but, above all, under use and, at the same time, allow the successful coupling in a composite of materials with such different mechanical properties such as elastomers, which are very elastic, and the fibres mentioned above, which are rather rigid.

These RFL-based adhesive compositions are applied to textile cords, generally by immersion. The cords thus treated can be incorporated into an elastomeric matrix to be subsequently assembled together with other semi-finished products in the building of a green tire, which is subsequently shaped, subjected to moulding and vulcanisation.

Typically, to further strengthen the adhesion of the cords to the rubbers, it is possible to introduce also in the compounds that will have to incorporate the cords or rubberizing compounds, similar additives, called adhesion promoters, generally comprising a methylenes donor agent such as hexamethylenetetramine, and a methylenes acceptor, such as resorcinol. During the vulcanisation step, the cross-linking of these additives allows a higher adhesiveness to be obtained, more or less high according to the type of compound, promoter, fibre and its treatments.

The Resorcinol - Formaldehyde (RF) system, despite being a well-known secondary cross-linking system and a very widespread and effective adhesive for cords, is however not ideal for industrial use, as it requires treatments that safeguard against the toxicity of both resorcinol and formaldehyde.

A further negative aspect concerns the synthesis of resorcinol from non-renewable sources (oil, petrochemicals). As it is known, non-renewable sources run out as they are consumed and additional resources need to be used to produce them again. In general, the use of non-renewable sources is not eco-sustainable and brings with it problems of environmental pollution.

The desire to substantially reduce - if not eliminate - the use of compositions comprising resorcinol in each step of the manufacture of tires is therefore apparent. The need is therefore felt to provide secondary cross-linking systems possibly obtainable from sustainable sources capable of imparting rigidity to the elastomeric compound of the tire, which promote a high resistance to breaking of its components and a high adhesion to the reinforcing elements.

US2017808 describes the use of furoic acid as an agent capable of preventing early vulcanisation (anti-scorching) in tire compounds.

### SUMMARY OF THE INVENTION

The Applicant has undertaken studies to identify thermally stable, eco-sustainable secondary cross-linking systems, capable of imparting stiffness to elastomeric compounds of tires and good adhesion to the reinforcing elements, with the aim of producing more performing tires, even under stress conditions, and structurally resistant.

For this purpose, the Applicant's activity has focused on secondary cross-linking systems, additional to the primary sulphur cross-linking, in particular on systems comprising products from sustainable sources.

In fact, one of the objectives set by the Applicant was to use compounds that are not toxic to humans and to the environment, replacing resorcinol, without however penalising the mechanical properties and adhesion of the compounds to the reinforcing elements.

In its studies, the Applicant has found that systems comprising furoic acid, its esters or its salts as methylenes acceptors and a methylenes donor agent have proved to be particularly effective as secondary cross-linking agents for elastomers.

These systems including furoic acid, its esters or its salts, much less harmful and more eco-compatible than resorcinol, are candidates to be excellent substitutes for the conventional RF system, in some respects even improving it since, after cross-linking, they can impart to the compounds that incorporate them a greater stiffness and hardness, improve the static and dynamic mechanical properties and provide a hysteresis comparable to, if not lower than, the conventional RF system, thus predicting an improvement in the performance of the tire in terms of structural integrity and reduction of fuel consumption.

Finally, the present systems substantially allow the good adhesiveness of the elastomeric compounds to the reinforcing elements of the traditional RF system to be maintained.

Therefore, a first aspect of the present invention is a composition for tire compounds comprising at least:
- 100 phr of at least one diene elastomeric polymer (A),
- at least 0.1 phr of at least one reinforcing filler (B),
- from 0.1 to 20 phr of a vulcanising agent (C),
- at least 0.1 phr of a secondary cross-linking system (D) which comprises at least one methylenes donor agent (D1) and at least one methylenes acceptor agent (D2) selected from furoic acid, its esters or its salts.

Advantageously, the furoic acid, its esters or its salts, when incorporated and cross-linked in elastomeric compounds for tires, impart better hysteretic properties and rigidity to them.

A further aspect of the present invention is a green or at least partially vulcanised elastomeric compound for tires, obtained by mixing and possibly vulcanising, at least partially, the composition according to the invention.

A further aspect of the present invention is a tire component for vehicle wheels comprising, or preferably consisting of, a green or at least partially vulcanised elastomeric compound, according to the invention.

A further aspect relates to a tire for vehicle wheels comprising at least a tire component according to the invention.

### DEFINITIONS

The term "cross-linking agent" indicates an agent capable of transforming natural or synthetic rubber into elastic and resistant material due to the formation of a three-dimensional network of inter- and intra-molecular bonds.

The term "vulcanising agent" means a cross-linking agent preferably selected from sulphur-based cross-linking agents such as elemental sulphur, polymeric sulphur, sulphur donor agents such as bis[(trialkoxysilyl)propyl]polysulphides, thiurams, dithiodimorpholines and caprolactam-disulphide, peroxides, such as dialkyl peroxides R - O - O - R, wherein R is an alkyl group, alkyl-aryl peroxides R - O - O - R', wherein R is an alkyl group and R' aryl, diaryl peroxides R'- O - O - R', wherein R' is an aryl group, diacylperoxides R-C(O)-O-O-(O)C-R', wherein R and R' are aryl and/or alkyl groups, peroxyketals R-O-O-(R)C(R')-O-O-R', wherein R and R' are aryl and/or alkyl groups, peroxyesters R-C(O)-O-O-R', wherein R and R' are aryl and/or alkyl groups, metal oxides, such as zinc oxide, quinones, resins and organic bases.

The term "methylenes donor agent" means formaldehyde or an organic compound derivative thereof which, under the usual vulcanisation conditions, can at least partially decompose releasing formaldehyde in situ, such as for example hexamethylenetetramine (HMT), hexamethoxymethylmelamine (HMMM), hexamethylol melamine, N,N'-dimethylolurea, N-methylol dicyanamide, N-allyl dioxazine, N-phenyl dioxazine, N-methylol-acetamide, N-methylol-butyramide, N-methylol-acrylamide, N-methylol-succinimide, lauryloxymethylpyridinium chloride, ethoxymethylpyridinium chloride, trioxane hexamethoxymethylmelamine and hexamethylolmelamine pentamethyl ether (HMPE). The methylenes donor agent is able to react with the methylenes acceptor agent typically forming a lattice, remaining wholly or partially incorporated therein.

The term "methylenes acceptor agent" refers to an aromatic organic compound, such as resorcinol or furoic acid, capable of reacting with a methylenes donor agent through an aromatic electrophilic substitution reaction and formation of a lattice.

The term "composition for tire compounds" means a composition comprising at least one diene polymer and one or more additives, which by mixing and possible heating provides an elastomeric compound suitable for use in tires and their components.

The components of said composition are not generally introduced simultaneously into the mixer but typically added in sequence. In particular, the vulcanisation additives, such as the vulcanisation agent and possibly the accelerant and retardant agents, are usually added in a downstream step with respect to the incorporation and processing of all the other components.

In the final compound, the individual components of the elastomeric composition may be altered or no longer individually traceable as modified, completely or in part, due to the interaction with the other components, of heat and/or mechanical processing.

The term "elastomeric compound" indicates the compound obtainable by mixing and possibly heating at least one polymer with at least one of the additives commonly used in the preparation of tire compounds.

The term "cross-linked or vulcanised elastomeric compound" means the material obtainable by cross-linking or vulcanisation of an elastomeric compound.

The term "green" indicates a material, a compound, a composition, a component or a tire not yet cross-linked.

The term "cross-linking" means the reaction of forming a three-dimensional lattice of inter- and intra-molecular bonds in a natural or synthetic rubber.

The term "vulcanisation" refers to the cross-linking reaction in a natural or synthetic rubber induced by a sulphur-based cross-linking agent.

The term "vulcanisation accelerant" means a compound capable of decreasing the duration of the vulcanisation process and/or the operating temperature, such as TBBS, sulphenamides in general, thiazoles, dithiophosphates, dithiocarbamates, guanidines, as well as sulphur donors such as thiurams.

The term "vulcanisation activating agent" indicates a product capable of further facilitating the vulcanisation, making it happen in shorter times and possibly at lower temperatures. An example of activating agent is the stearic acid - zinc oxide system. The term "vulcanisation retardant" means a product capable of delaying the onset of the vulcanisation reaction and/or suppressing undesired secondary reactions, for example N-(cyclohexylthio)phthalimide (CTP).

The term "vulcanisation package" is meant to indicate the vulcanising agent and one or more vulcanisation additives selected from among vulcanisation activating agents, accelerants and retardants.

The term "secondary cross-linking system" is meant to indicate a cross-linking system, comprising at least one methylenes acceptor selected from furoic acid, its esters or its salts, in addition to the primary cross-linking system or sulphur vulcanisation system.

The term "elastomeric polymer" indicates a natural or synthetic polymer which, after cross-linking, can be stretched repeatedly at room temperature to at least twice its original length and after removal of the tensile load substantially immediately returns with force to approximately its original length (according to the definitions of the ASTM D1566-11 Standard terminology relating to Rubber).

The term "diene polymer" indicates a polymer derived from the polymerisation of one or more monomers, of which at least one is a conjugated diene.

The term "reinforcing filler" is meant to refer to a reinforcing material typically used in the sector to improve the mechanical properties of tire rubbers, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

The term "white filler" is meant to refer to a conventional reinforcing material used in the sector selected from among conventional silica and silicates, such as sepiolite, paligorskite also known as attapulgite, montmorillonite, alloisite and the like, possibly modified by acid treatment and/or derivatised. Typically, white fillers have surface hydroxyl groups.

The term "mixing step (1)" indicates the step of the preparation process of the elastomeric compound in which one or more additives may be incorporated by mixing and possibly heating, except for the vulcanisation agent which is fed in step (2). The mixing step (1) is also referred to as "non-productive step". In the preparation of a compound there may be several "non-productive" mixing steps which may be indicated with 1a, 1b, etc.

The term "mixing step (2)" indicates the next step of the preparation process of the elastomeric compound in which the vulcanisation agent and, possibly, the other additives of the vulcanisation package are introduced into the elastomeric compound obtained from step (1), and mixed in the material, at controlled temperature, generally at a temperature of compound lower than 120 °C, so as to provide the vulcanisable elastomeric compound. The mixing step (2) is also referred to as "productive step".

The term "conventional cross-linking process or system" means a process or a system in which the cross-linking of the compound essentially takes place by vulcanisation with sulphur-based vulcanisation agents.

For the purposes of the present description and the following claims, the term "phr" (acronym for parts per hundreds of rubber) indicates the parts by weight of a given elastomeric compound component per 100 parts by weight of the polymer, net of any plasticising extension oils.

Unless otherwise indicated, all the percentages are expressed as percentages by weight.

### BRIEF DESCRIPTION OF THE FIGURES

With reference to the accompanying figures:
- Figure 1 shows a tire for vehicle wheels comprising at least one component comprising the elastomeric compound according to the invention.
- Figure 2 shows the trend of the torque S' during the vulcanisation of the composition according to Example 1 (rheometric analysis MDR 30 minutes at 170 °C).
- Figure 3 shows the trend of the torque S' during the vulcanisation of the composition according to Example 2 (rheometric analysis MDR 30 minutes at 170 °C).
- Figure 4 shows the trend of the torque S' during the vulcanisation of the compositions according to Examples 12 (Curve A) and 13 (Curve B) (rheometric analysis MDR 30 minutes at 170 °C).

### DETAILED DESCRIPTION OF THE INVENTION

The composition for tire compounds according to the present invention is characterised by one or more of the following preferred aspects taken alone or in combination with each other.

The composition according to the invention comprises at least 100 phr of at least one diene polymer (A).

The diene polymer (A) may be selected from those commonly used in sulphur-vulcanisable elastomeric compositions, which are particularly suitable for producing tires, i.e. from among solid elastomeric polymers or copolymers with an unsaturated chain having a glass transition temperature (Tg) generally lower than 20 °C, preferably in the range from 0 °C to -110 °C.

These polymers or copolymers may be of natural origin or may be obtained by solution polymerization, emulsion polymerization or gas-phase polymerization of one or more conjugated dienes, optionally mixed with at least one comonomer selected from monoolefins, monovinylarenes and/or polar comonomers in an amount not exceeding 60% by weight.

The conjugated dienes generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof. 1,3-butadiene and isoprene are particularly preferred.

The monoolefins may be selected from ethylene and α-olefins generally containing from 3 to 12 carbon atoms, such as for example propylene, 1-butene, 1-pentene, 1-hexene, 1-octene or mixtures thereof.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4- (4-phenylbutyl)styrene, and mixtures thereof. Styrene is particularly preferred.

Polar comonomers that may optionally be used, may be selected, for example, from: vinylpyridine, vinylquinoline, acrylic acid and alkylacrylic acid esters, acrylonitriles, or mixtures thereof, such as, for example, methyl acrylate, ethyl acrylate, methyl methacrylate, ethyl methacrylate, acrylonitrile and mixtures thereof.

Preferably, the diene polymer (A) may be selected, for example, from among: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

The composition according to the invention may possibly comprise at least one polymer of one or more monoolefins with an olefinic comonomer or derivatives thereof. The monoolefins may be selected from: ethylene and α-olefins generally containing from 3 to 12 carbon atoms, such as for example propylene, 1-butene, 1-pentene, 1-hexene, 1-octene or mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene or mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; and mixtures thereof.

The composition for tires according to the present invention comprises at least 0.1 phr of at least one reinforcing filler (B), preferably at least 1 phr. Even more preferably, the composition may comprise at least 5 phr of said reinforcing filler (B). The present composition may comprise from 1 phr to 170 phr, from 5 phr to 150 phr or from 10 phr to 120 phr of at least one reinforcing filler (B).

Preferably, the reinforcing filler (B) is selected from carbon black, white fillers, silicate fibres or mixtures thereof.

In one embodiment, said reinforcing filler (B) is a white filler selected from among hydroxides, oxides and hydrated oxides, salts and hydrated salts of metals, silicates fibres or mixtures thereof. Preferably, said white filler is silica.

Preferably, silica as reinforcing filler (B) is present in the composition according to the invention in an amount of between 1 phr and 150 phr, more preferably between 10 phr and 70 phr.

Commercial examples of suitable conventional silica are Zeosil 1165 MP from Solvay, and Ultrasil 7000 GR from Evonik.

In another embodiment, said reinforcing filler (B) is carbon black.

Preferably, carbon black as reinforcing filler (B) is present in the composition according to the invention in an amount of between 1 phr and 120 phr, preferably between 5 phr and 100 phr.

Preferably, the carbon black is selected from those having a surface area not smaller than 20 m²/g, preferably larger than 50 m²/g (as determined by STSA - statistical thickness surface area according to ISO 18852:2005).

The carbon black may be, for example, N234, N326, N330, N375 or N550, N660 marketed by Birla Group (India) or by Cabot Corporation.

The composition for tire compounds according to the invention may comprise from 0.1 to 20 phr of at least a vulcanising agent (C).

The vulcanising agent (C) is a cross-linking agent preferably selected from sulphur-based cross-linking agents such as elemental sulphur, polymeric sulphur, sulphur donor agents such as bis[(trialkoxysilyl)propyl]polysulphides, thiurams, dithiodimorpholines and caprolactam-disulphide, peroxides, such as dialkyl peroxides R - O - O - R, wherein R is an alkyl group, alkyl-aryl peroxides R - O - O - R', wherein R is an alkyl group and R' aryl, diaryl peroxides R'- O - O - R', wherein R' is an aryl group, diacylperoxides R-C(O)-O-O-(O)C-R', wherein R and R' are aryl and/or alkyl groups, peroxyketals R-O-O-(R)C(R')-O-O-R', wherein R and R' are aryl and/or alkyl groups, peroxyesters R-C(O)-O-O-R', wherein R and R' are aryl and/or alkyl groups, metal oxides, such as zinc oxide, quinones, resins and organic bases.

Said at least one vulcanising agent (C) is preferably a sulphur-based vulcanising agent selected from sulphur, or alternatively, sulphur-containing molecules (sulphur donors), such as for example bis(trialcoxysilyl)propyl]polysulphides and mixtures thereof. Preferably, the vulcanising agent (C) is sulphur, even more preferably selected from soluble sulphur (crystalline sulphur), insoluble sulphur (polymeric sulphur), and oil-dispersed sulphur and mixtures thereof. Commercial example of a vulcanising agent (C) suitable for use in the composition of the invention is the Redball Superfine sulphur of International sulphur Inc.

Preferably, the composition according to the invention comprises at least 0.5 phr, 0.8 phr or 1 phr of at least one vulcanising agent (C), preferably a sulphur-based cross-linking agent selected from those indicated above.

Even more preferably, the composition comprises from 0.1 to 15 phr, 0.2 to 10 phr, 1 to 10 phr or 1.5 to 7 phr of at least one vulcanising agent (C), preferably a sulphur-based cross-linking agent selected from those indicated above.

The composition according to the invention may further comprise adjuvants known to those skilled in the art such as vulcanisation activators, accelerants and/or retardants.

The vulcanisation activating agents which may be used in the present composition are zinc compounds, in particular ZnO, ZnCO₃, zinc salts of saturated or unsaturated fatty acids containing from 8 to 18 carbon atoms, which are preferably formed in situ in the composition by reaction of ZnO and of the fatty acid, as well as Bi₂O₃, PbO, Pb₃O₄, PbO₂, or mixtures thereof. For example, zinc stearate is used, preferably formed in situ in the composition, by ZnO and fatty acid, or magnesium stearate, formed by MgO, or mixtures thereof. Preferred activating agents derive from the reaction of zinc oxide and stearic acid. An example of activator is the product Aktiplast ST marketed by Rheinchemie.

In particular, the vulcanisation activating agents indicated above may be present in the composition of the invention in amounts preferably from 0.2 phr to 15 phr, more preferably from 1 phr to 5 phr.

The composition according to the invention may further comprise at least one vulcanisation accelerant.

Vulcanisation accelerants commonly used may be for example selected from dithiocarbamates, guanidines, thioureas, thiazoles, sulphenamides, sulphenimides, thiurams, amines, xanthates, or mixtures thereof. Preferably, the accelerant agent is selected from mercaptobenzothiazole (MBT), N-cyclohexyl-2-benzothiazol-sulphenamide (CBS), N-tert-butyl-2-benzothiazol-sulphenamide (TBBS) and mixtures thereof.

Commercial examples of accelerants suitable for use in the present composition are N-cyclohexyl-2-benzothiazyl-sulphenamide Vulkacit^{®} (CBS or CZ), and N-terbutyl 2-benzothiazil sulphenamide, Vulkacit^{®} NZ/EGC marketed by Lanxess.

In particular, the vulcanisation accelerants indicated above may be used in the present composition in an amount preferably from 0.05 phr to 10 phr, preferably from 0.1 phr to 7 phr, more preferably from 0.5 phr to 5 phr.

The composition according to the invention may further comprise at least one vulcanisation retardant agent.

The vulcanisation retardant agent suitable for use in the present composition is preferably selected from urea, phthalic anhydride, N-nitrosodiphenylamine N-cyclohexylthiophthalimide (CTP or PVI) and mixtures thereof. A commercial example of a suitable retardant agent is N-cyclohexylthiophthalimide VULKALENT G of Lanxess. The vulcanisation retardant agent may be present in the present composition in an amount of preferably from 0.05 phr to 2 phr.

In one embodiment, the composition according to the invention may further comprise at least 0.05 phr, preferably at least 0.1 phr or 0.5 phr, more preferably at least 1 phr or 2 phr of at least one silane coupling agent.

The composition for tire compounds according to the invention comprises a cross-linking system (D) which comprises at least one methylenes donor agent (D1) and at least one methylenes acceptor agent (D2) selected from furoic acid, its esters or its salts.

The methylenes donor agent (D1) may be formaldehyde or a derivative thereof which, when heated during vulcanisation, can release formaldehyde in situ, forming a lattice with furoic acid, its esters or its salts in the compound.

Examples of suitable methylenes donor agents (D1) include, but are not limited to, hexamethylenetetramine (HMT), hexamethoxymethylmelamine (HMMM), hexamethylol melamine, N,N'-dimethylolurea, N-methylol dicyanamide, N-allyl dioxazine, N-phenyl dioxazine, N-methylol-acetamide, N-methylol-butyramide, N-methylol-acrylamide, N-methylol-succinimide, lauriloxymethylpyridinium chloride, ethoxymethylpyridinium chloride, trioxan hexamethoxymethylmelamine, as described for example in US3751331, preferably HMMM or HMT.

The methylenes donor agent (D1) is preferably present in the compound in amounts of from 0.5 to 15 phr, preferably from 0.5 to 10 phr.

The cross-linking system (D) comprises at least one methylenes acceptor (D2) selected from furoic acid, its esters or its salts.

Furoic acid is a carboxylic acid of formula (I):

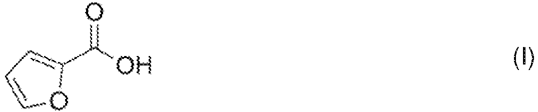

Furoic acid is an organic compound found in food as a preservative and flavouring agent. The use of furoic acid as a flavouring agent in the food industry indicates the safety of this product which may be used without particular precautions or restrictions as part of the cross-linking system of elastomeric compounds.

Furthermore, furoic acid may be produced from organic waste rich in cellulose such as corn or corn straw, sugar cane bagasse, sawdust etc. The reactivity of the furoic acid and the final properties of the compounds comprising it are surprisingly very close to those of resorcinol and, therefore, the furoic acid, its esters or its salts may be advantageously used as a technological alternative to resorcinol.

According to the invention, suitable furoic acid salts are preferably selected from alkaline or alkaline earth inorganic salts such as sodium, potassium, zinc or calcium furoate, organic salts such as quaternary ammonium salts, and mixtures thereof.

Preferably, the quaternary ammonium furoate is the furoate of a quaternary ammonium of the formula NR₄⁺ wherein the R groups, equal or different from each other, preferably represent a linear or branched C1-C20 alkyl.

According to the invention, suitable furoic acid esters are preferably selected from C₁-C₁₈ alkyl esters, more preferably from C₁-C₅ alkyl esters.

The methylenes acceptor agent (D2) is preferably present in the compound in amounts of from 0.5 to 15 phr, preferably from 0.5 to 10 phr.

According to the invention, the composition for tire compounds comprises a secondary cross-linking system (D) in which the methylenes donor agent (D1) and the furoic acid, its salts or its esters, are in a weight ratio preferably of between 1:0.1 and 1:10, preferably between 1:0.5 and 1:5.

A second aspect of the present invention is a green or at least partially vulcanised elastomeric compound for tires, obtained by mixing and possibly cross-linking, at least partially, the composition for tire compounds described above.

The elastomeric compound according to the invention may typically be consolidated by reacting the secondary cross-linking system (D) which comprises at least one methylenes donor agent (D1) and at least one methylenes acceptor agent (D2) selected from furoic acid, its esters or its salts together with the conventional primary cross-linking system comprising the sulphur-based vulcanising agent (C).

The present elastomeric compound may be prepared according to a process which typically comprises one or more mixing steps in at least one suitable mixer, in particular at least one mixing step 1 (non-productive) and a mixing step 2 (productive) as defined above.

Each mixing step may comprise several intermediate processing steps or sub-steps, characterised by the momentary interruption of the mixing to allow the addition of one or more ingredients but without intermediate discharge of the compound.

The mixing may be carried out, for example, using an open mixer of the "open-mill" type or an internal mixer of the type with tangential rotors (Banbury^{®}) or with interpenetrating rotors (Intermix), or in continuous mixers of the Ko-Kneader^{™} type (Buss^{®}) or of the twin-screw or multi-screw type.

For this purpose, after one or more stages of thermo-mechanical treatment (step 1), where typically the rubber is processed with some of the additives such as reinforcing fillers, activators, antioxidants and, preferably, the methylenes acceptor agent (D2 ) of the secondary cross-linking system (D), the vulcanising agent (C) and the methylenes donor agent (D1) of the secondary cross-linking system (D) are incorporated in the materials, preferably together with vulcanisation accelerants and/or retardants. In the final treatment step (production step 2), the temperature is generally kept below 120 °C and preferably below 100 °C, so as to prevent any undesired pre-vulcanisation phenomena. Thereafter, the compound is incorporated in one or more components of the tire and subjected to vulcanisation, according to known techniques.

In one embodiment, the compound according to the invention is a rubberizing compound, i.e. a compound which is reinforced by incorporating reinforcing elements of various kinds, metallic or non-metallic. Advantageously, the present secondary cross-linking system (D) imparts to the present compounds an excellent adhesion to the reinforcing elements.

A further aspect of the present invention is a tire component for vehicle wheels comprising, or preferably consisting of, a green or at least partially vulcanised elastomeric compound, according to the invention, preferably selected from the tread band, under-layer, anti-abrasive layer, sidewall, sidewall insert, mini-sidewall, liner, under-liner, rubber layers, bead filler, bead reinforcing layers (flipper), bead protection layers (chafer), sheet.

The tire component may comprise or preferably may consist of a non-cross-linked and non-vulcanised elastomeric compound according to the invention (green component) or a cross-linked and vulcanised elastomeric compound according to the invention (totally cross-linked component).

In one embodiment, the tire component according to the invention comprises reinforcing elements. Preferably, said reinforcing elements consist of one or more materials selected from polyamides such as nylon and aramid, polyesters, such as polyethylene terephthalate (PET) and cellulose derivatives such as Rayon or Lyocell, more preferably PET.

Non-exhaustive examples of reinforced tire components are the carcass structure, the belt structure and the protection (chafer) or reinforcement (flipper) layers of the bead.

A further aspect of the present invention is a tire for vehicle wheels comprising at least one component according to the invention.

In one embodiment, the present tire comprises at least one reinforced tire component according to the invention preferably selected from carcass structure, belt structure and protective (chafer) or reinforcing (flipper) layers of the bead.

In one embodiment, the present tire comprises at least one non-reinforced tire component according to the invention preferably selected from under-layer, sheet, sidewall and tread band.

In one embodiment, the tire according to the invention comprises at least:
- a carcass structure comprising at least a carcass ply having opposite lateral edges associated to respective bead structure;
- possibly a pair of sidewalls applied to the lateral surfaces of the carcass structure, respectively, in an axially outer position;
- possibly a belt structure applied in radially outer position with respect to the carcass structure;
- a tread band applied in a radially outer position to said carcass structure or, if present, a belt structure,
- possibly a layer of elastomeric material, referred to as under-layer, applied in a radially inner position with respect to said tread band,
wherein at least one component comprises, or preferably consists of, the elastomeric compound according to the invention.

The tire according to the invention may be a tire for vehicles with two, three or four wheels and may be for summer or winter use or for all seasons.

In one embodiment, the tire according to the invention is a tire for motorcycle wheels, wherein at least one component comprises, or preferably consists of, the elastomeric compound according to the invention. Typically, a tire for motorcycle wheels is a tire that has a straight section characterised by a high transverse curvature.

In a preferred embodiment, the tire according to the invention is a tire for wheels of sports or racing motorcycles.

In one embodiment, the tire according to the invention is a tire for car wheels.

In one embodiment, the tire according to the invention is a tire for high performance cars (HP, SUV and UHP), wherein at least one component comprises, or preferably consists of, the elastomeric compound according to the invention.

In one embodiment, the tire according to the invention is a tire for bicycle wheels. A tire for bicycle wheels typically comprises a carcass structure turned around a pair of bead cores at the beads and a tread band arranged in a radially outer position with respect to the carcass structure.

The tire according to the present invention may be produced according to a process which comprises:
- building components of a green tire on at least one forming drum;
- shaping, moulding and vulcanising the tire;
wherein building at least one of the components of a green tire comprises:
- manufacturing at least one green component comprising, or preferably consisting of, the elastomeric compound according to the invention.

### DESCRIPTION OF A TIRE ACCORDING TO THE INVENTION

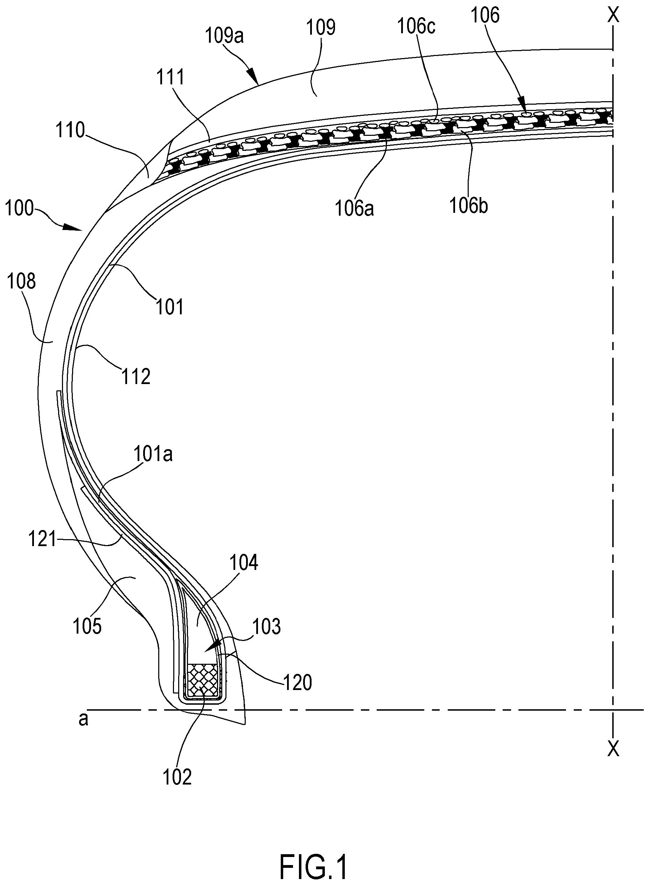

A tire for vehicle wheels according to the invention, comprising at least one component comprising the present elastomeric compound, is illustrated in radial half-section in Figure 1.

In Figure 1, "a" indicates an axial direction and "X" indicates a radial direction, in particular X-X indicates the outline of the equatorial plane. For simplicity, Figure 1 shows only a portion of the tire, the remaining portion not shown being identical and arranged symmetrically with respect to the equatorial plane "X-X".

The tire (100) for four-wheeled vehicles comprises at least one carcass structure, comprising at least one carcass layer (101) having respectively opposite end flaps engaged with respective annular anchoring structures (102), referred to as bead cores, possibly associated to a bead filler (104).

The tire area comprising the bead core (102) and the filler (104) forms a bead structure (103) intended for anchoring the tire onto a corresponding mounting rim, not shown.

The carcass structure is usually of radial type, i.e. the reinforcing elements of the at least one carcass layer 101 lie on planes comprising the rotational axis of the tire and substantially perpendicular to the equatorial plane of the tire. Said reinforcing elements generally consist of textile cords, such as rayon, nylon, polyester (for example polyethylene naphthalate, PEN). Each bead structure is associated to the carcass structure by folding back of the opposite lateral edges of the at least one carcass layer (101) around the annular anchoring structure (102) so as to form the so-called carcass flaps (101a) as shown in Figure 1.

In one embodiment, the coupling between the carcass structure and the bead structure can be provided by a second carcass layer, not shown in Figure 1, applied in an axially external position with respect to the first carcass layer.

An anti-abrasive strip (105) possibly made with elastomeric material is arranged in an external position of each bead structure (103).

The carcass structure is associated to a belt structure (106) comprising one or more belt layers (106a), (106b) placed in radial superposition with respect to one another and with respect to the carcass layer, having typically textile and/or metallic reinforcing cords incorporated within a layer of elastomeric material.

Such reinforcing cords may have crossed orientation with respect to a direction of circumferential development of the tire (100). By "circumferential" direction it is meant a direction generally facing in the direction of rotation of the tire.

At least one zero-degree reinforcing layer (106c), commonly known as a "0° belt", may be applied in a radially outermost position to the belt layers (106a), (106b), which generally incorporates a plurality of elongated reinforcing elements, typically metallic or textile cords, oriented in a substantially circumferential direction, thus forming an angle of few degrees (such as an angle of between about 0° and 6°) with respect to a direction parallel to the equatorial plane of the tire, and coated with an elastomeric material.

A tread band (109) comprising the elastomeric compound according to the invention is applied in a position radially outer to the belt structure (106).

Moreover, respective sidewalls (108) of elastomeric material are applied in an axially outer position on the lateral surfaces of the carcass structure, each extending from one of the lateral edges of tread (109) at the respective bead structure (103).

In a radially external position, the tread band (109) has a rolling surface (109a) intended to come in contact with the ground. Circumferential grooves, which are connected by transverse notches (not shown in Figure 1) so as to define a plurality of blocks of various shapes and sizes distributed over the rolling surface (109a), are generally made on this surface (109a), which for simplicity is represented smooth in Figure 1.

An under-layer (111) of elastomeric material may be arranged between the belt structure (106) and the tread band (109).

A strip consisting of elastomeric material (110), commonly known as "mini-sidewall", may optionally be provided in the connecting zone between the sidewalls (108) and the tread band (109), this mini-sidewall being generally obtained by co-extrusion with the tread band (109) and allowing an improvement of the mechanical interaction between the tread band (109) and the sidewalls (108). Preferably, the end portion of the sidewall (108) directly covers the lateral edge of the tread band (109).

In the case of tubeless tires, a rubber layer 112, generally known as "liner", which provides the necessary impermeability to the inflation air of the tire, may also be provided in a radially internal position with respect to the carcass layer 101.

The rigidity of the tire sidewall 108 may be improved by providing the bead structure 103 with a reinforcing layer 120 generally known as "flipper" or additional strip-like insert.

The flipper 120 is a reinforcing layer which is wound around the respective bead core 102 and the bead filler 104 so as to at least partially surround them, said reinforcing layer being arranged between the at least one carcass layer 101 and the bead structure 103. Usually, the flipper is in contact with said at least one carcass layer (101) and said bead structure (103).

The flipper 120 typically comprises a plurality of textile cords incorporated within a layer of elastomeric material.

The reinforcing annular structure or bead (103) of the tire may comprise a further protective layer which is generally known by the term of "chafer" (121) or protective strip and which has the function of increasing the rigidity and integrity of the bead structure (103).

The chafer (121) usually comprises a plurality of cords incorporated within a rubber layer of elastomeric material. Such cords are generally made of textile materials (such as aramide or rayon) or metal materials (such as steel cords).

A layer or sheet of elastomeric material may be arranged between the belt structure and the carcass structure. The layer may have a uniform thickness. Alternatively, the layer may have a variable thickness in the axial direction. For example, the layer may have a greater thickness close to its axially external edges with respect to the central (crown) zone.

Advantageously, the layer or sheet may extend on a surface substantially corresponding to the extension surface of said belt structure.

In a preferred embodiment, a layer of elastomeric material, referred to as under-layer, may be placed between said belt structure and said tread band, said under-layer preferably extending on a surface substantially corresponding to the extension surface of said belt structure.

The elastomeric compound according to the present invention can advantageously be incorporated in one or more of the above tire components.

The building of the tire (100) as described above, may be carried out by assembling respective semi-finished products adapted to form the components of the tire, on a forming drum, not shown, by at least one assembling device.

At least a part of the components intended to form the carcass structure of the tire may be built and/or assembled on the forming drum. More particularly, the forming drum is intended to first receive the possible liner, and then the carcass structure. Thereafter, devices non shown coaxially engage one of the annular anchoring structures around each of the end flaps, position an outer sleeve comprising the belt structure and the tread band in a coaxially centred position around the cylindrical carcass sleeve and shape the carcass sleeve according to a toroidal configuration through a radial expansion of the carcass structure, so as to cause the application thereof against a radially inner surface of the outer sleeve.

After the building of the green tire, a moulding and vulcanisation treatment is generally carried out in order to determine the structural stabilisation of the tire through cross-linking of the elastomeric compositions, as well as to impart a desired tread pattern on the tread band and at any distinguishing graphic signs at the sidewalls.

### EXPERIMENTAL PART

### Methods of analysis

Density: measured according to the ISO 2781 method (sample vulcanised 10 min. at 170 °C)

IRHD hardness (23 °C): hardness was measured according to the ISO 48:2007 standard on samples of the elastomeric materials, vulcanised at 170 °C for 10 minutes.

Static mechanical properties (CA05 load at 50% elongation, CA1 load at 100% elongation, CA3 load at 300% elongation, CR load at break, AR% elongation at break) according to the UNI 6065:2001 standard were measured at 23 °C on samples of elastomeric materials, vulcanised at 170 °C for 10 minutes.

Compressive dynamic mechanical properties E', E" and Tan delta were measured using an Instron model 1341 dynamic device in the tension-compression mode as described herein. A test piece of vulcanised material (170 °C for 10 minutes) having a cylindrical shape (length = 25 mm; diameter = 14 mm), preloaded in compression up to a longitudinal strain of 25% with respect to the initial length and maintained at the predetermined temperature of 23 °C for the whole duration of the test was subjected to a dynamic sinusoidal strain having an amplitude of ± 3.5% with respect to the length under pre-load, with a frequency of 10 Hz. The dynamic mechanical properties are expressed in terms of dynamic elastic modulus (E'), dynamic viscous modulus (E") and Tan delta (loss factor). The Tan delta value was calculated as the ratio between the viscous dynamic module (E") and the dynamic elastic modulus (E').

### Rheometric analysis MDR (according to ISO 6502)

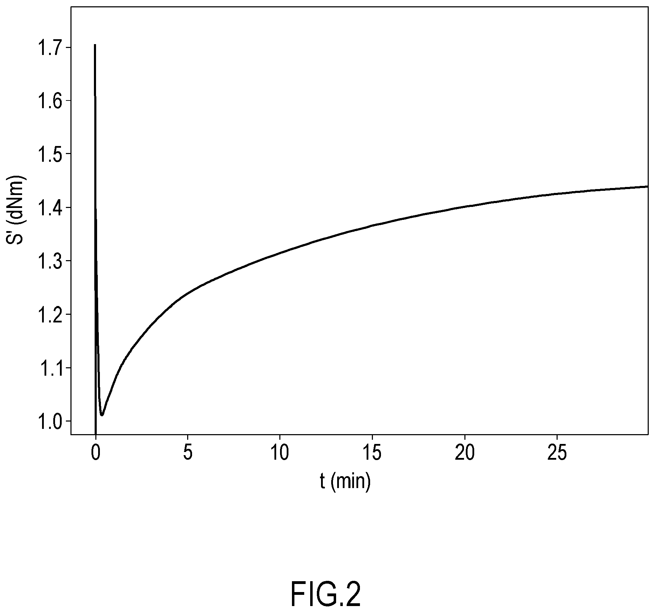

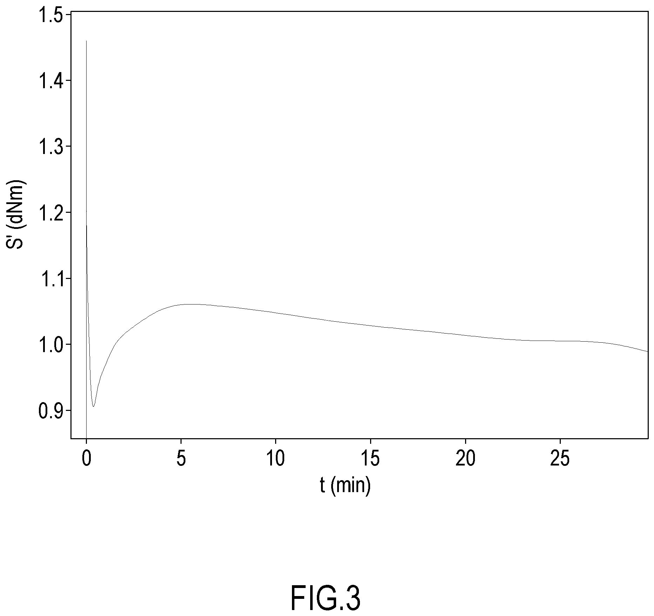

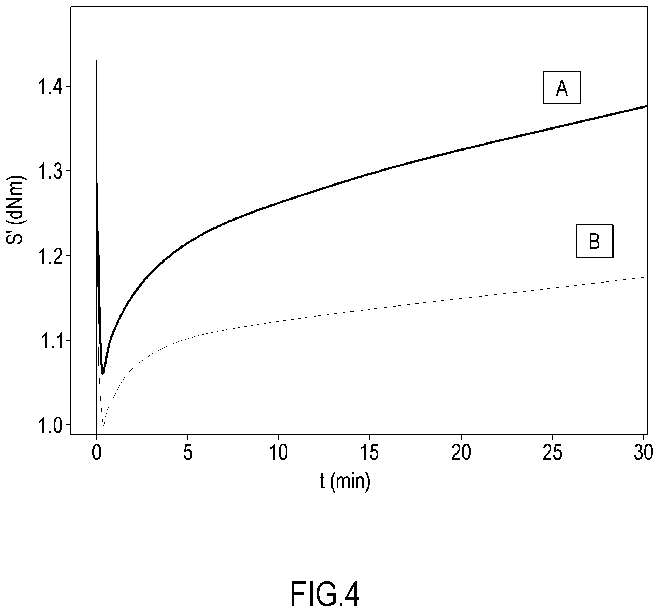

An Alpha Technologies type MDR2000 rheometer was used for this analysis. The tests were carried out at 170 °C for 20 minutes at an oscillation frequency of 1.66 Hz (100 oscillations per minute) and an oscillation amplitude of ± 0.5°, measuring the time necessary to achieve an increase of two rheometric units (TS2) and the time necessary to achieve 5%, 30%, 60% and 90% (T05, T30, T60, T90), respectively, of the final torque value (Mf). The maximum torque value MH and the minimum torque value ML were measured. Vulcanisation curves with torque values S' are shown in Figures 2, 3 and 4.

Adhesion test (H-test, for extraction), measures the force required to remove the cord from the block of elastomeric material of the sample after vulcanisation, performed according to the ASTM D4776 method (maximum peeling force).

The samples vulcanised for 40 minutes at 151 °C comprised nylon, PET or aramid textile cords, respectively.

The textile cords were previously treated by immersion in an adhesive RFL composition, comprising a latex of a styrene-butadiene-vinyl pyridine polymer, resorcinol and formaldehyde, and subsequent heating to about 200-250 °C for fixing.

The cords thus treated were rubberized with comparative compounds and according to the invention, the detailed compositions of which are reported in Tables 2 to 4 to give representative samples of tire reinforced structural elements.

The samples were prepared following the indications given in ASTM D4776 and subjected to the evaluation of adhesion, in accordance with the procedure.

Tables 7 and 8 show the maximum force values expressed in Newton measured according to the ASTM D4776 standard on 9.52 mm specimens (as per point 6.3 of the standard).

### Examples

Demonstrative, according to the invention, and comparative elastomeric compounds were prepared starting from the compositions reported in the following Tables 1 and 5.

These compounds were used to study the reactivity of the secondary cross-linking system of the invention (D) and to follow the cross-linking trend (see Figures 2-4). Elastomeric compounds for tire according to the invention and comparative ones were prepared starting from the compositions reported in the following Tables 2-4.

**Table 1**

| Demonstrative compositions comprising only a secondary cross-linker (D) comprising a methylenes donor agent (D1) and furoic acid (D2), in the absence of other cross-linking systems | | | |
|---|---|---|---|
| Step of addition | Ingredient | Ex. 1 INV | Ex. 2 INV |
| 1 | E-SBR 1723 | 100.00 (106.30) | 100.00 (106.30) |
| 1 | 6PPD | 0.94 | 0.94 |
| 1 | N550 | 37.63 | 37.63 |
| 1 | TDAE | 4.70 | 4.70 |
| 1 | Furoic acid | 2.82 | 2.82 |
| 2 | HMMM | 5.64 | --- |
| 2 | HMT | --- | 2.82 |
| | Total | 151.73 | 148.91 |

wherein
INV: example according to the invention
E-SBR 1723: Versalis styrene-butadiene polymer extended to 27% with TDAE (total phr including 100 phr of polymer and 6.30 phr of oil are shown in brackets)
6PPD (antioxidant): N-(1,3-dimethylbutyl)-N'-phenyl-p-phenylene-diamine from Eastman
N550: carbon black from Cabot Corp.
TDAE (Treated Distillate Aromatic Extract): H&R process oil
Furoic Acid: from Merck
HMMM: 65% hexamethoxymethylmelamine predispersed on Brenntag VN3 silica.
HMT: 80% hexamethylenetetramine predispersed in Brenntag EPDM rubber.

**Table 2**

| Compositions for rubberizing compounds of metal cords comprising sulphur vulcaniser and comparative vulcanisation additives (without secondary cross-linker - Ex. 3 or with resorcinol system and methylenes donor agent - Ex. 4) or according to the invention (with secondary cross-linker (D) comprising furoic acid and methylenes donor agent - Ex. 5) | | | | |
|---|---|---|---|---|
| Step of addition | Ingredient | Ex. 3 COMP | Ex. 4 COMP | Ex. 5 INV |
| 1 | NR | 100.00 | 100.00 | 100.00 |
| 1 | TESPT | 2.00 | 2.00 | 2.00 |
| 1 | ZnO | 7.60 | 7.60 | 7.60 |
| 1 | 6PPD | 2.00 | 2.00 | 2.00 |
| 1 | Cobalt/boron salt | 1.00 | 1.00 | 1.00 |
| 1 | Resorcinol | ------- | 1.5 | --- |
| 1 | N326 | 46.00 | 46.00 | 46.00 |
| 1 | Silica | 8.75 | 8.75 | 8.75 |
| 1 | Resin | 0.75 | 0.75 | 0.75 |
| 1 | Furoic acid | ------- | --- | 1.50 |
| 2 | HMMM | 3.25 | 3.25 | 3.25 |
| 2 | DCBS | 1.50 | 1.50 | 1.50 |
| 2 | Sulphur 65% | 7.4 | 7.4 | 7.4 |
| | Total | 180.25 | 181.75 | 181.75 |

wherein
COMP: comparative example
NR: natural rubber SIR 20 from Kirana Megatara supplier
TESPT: Bis(triethoxysilylpropyl)tetrasulphide supported at 50% on carbon black N330 from Evonik
ZnO: zinc oxide from Emphilis
Cobalt/Boron Salt: Manobond 680C bivalent cobalt salt from Shepherd Ltd
Resorcinol: from Sumitomo
N326: Carbon Black from Cabot Corp.
Silica: amorphous silica VN3 from Evonik
Resin: octyl phenol-formaldehyde adhesive resin from Si-Group
DCBS: N,N-Dicyclohexyl-2-benzothiazolsulphenamide from Huatai Chemicals
65% sulphur: insoluble sulphur on 65% EPDM from Rhein Chemie GmBH,
and the other ingredients have the meaning given above.

**Table 3**

| Compositions for rubberizing compounds for textile cords comprising sulphur vulcaniser and comparative vulcanisation additives (without secondary cross-linker - Ex. 6 or with resorcinol system and methylenes donor - Ex. 7) or according to the invention (with secondary cross-linker (D) comprising furoic acid and methylenes donor - Ex. 8) | | | | |
|---|---|---|---|---|
| Step of addition | Ingredient | Ex. 6 COMP | Ex. 7 COMP | Ex. 8 INV |
| 1 | NR | 100.00 | 100.00 | 100.00 |
| 1 | ZnO | 6.00 | 6.00 | 6.00 |
| 1 | Stearic acid | 1.50 | 1.50 | 1.50 |
| 1 | 6PPD | 1.00 | 1.00 | 1.00 |
| 1 | Resorcinol | --- | 1.26 | --- |
| 1 | N326 | 52.00 | 52.00 | 52.00 |
| 1 | Furoic acid | --- | --- | 1.26 |
| 2 | HMMM | 2.92 | 2.92 | 2.92 |
| 2 | TBBS | 1.00 | 1.00 | 1.00 |
| 2 | CTP | 0.30 | 0.30 | 0.30 |
| 2 | Sulphur 67% | 4.50 | 4.50 | 4.50 |
| | Total | 169.22 | 170.48 | 170.48 |

wherein
Stearic acid: from Wilmar
TBBS (accelerant): N-tert-butyl-2-benzothiazylsulfenamide from Huatai Chemicals CTP (retardant): N-(cyclohexylthio)phthalimide from Huatai Chemicals
67% Sulphur: 67% insoluble sulphur from Eastman
and the other ingredients have the meaning given above.

**Table 4**

| Compositions for rubberizing compounds for textile cords comprising sulphur vulcaniser and comparative vulcanisation additives (with resorcinol system and methylenes donor Ex. 9) or according to the invention (with secondary cross-linker (D) comprising salts (Ex. 10) or esters (Ex. 11) of furoic acid and methylenes donor) | | | | |
|---|---|---|---|---|
| Step of addition | Ingredient | Ex. 9 COMP | Ex. 10 INV | Ex. 11 INV |
| 1 | NR | 100.00 | 100.00 | 100.00 |
| 1 | ZnO | 6.00 | 6.00 | 6.00 |
| 1 | Stearic acid | 1.50 | 1.50 | 1.50 |
| 1 | 6PPD | 1.00 | 1.00 | 1.00 |
| 1 | Resorcinol | 1.26 | --- | --- |
| 1 | N326 | 52.00 | 52.00 | 52.00 |
| 1 | Sodium furoate | --- | 1.57 | --- |
| 1 | Ethyl furoate | --- | --- | 2.50 |
| 2 | HMMM | 2.92 | 2.92 | 2.92 |
| 2 | TBBS | 1.00 | 1.00 | 1.00 |
| 2 | CTP | 0.30 | 0.30 | 0.30 |
| 2 | Sulphur 67% | 4.50 | 4.50 | 4.50 |
| | Total | 170.48 | 170.79 | 171.72 |

wherein
Sodium Furoate and Ethyl Furoate were supplied by Merck,
and the other ingredients have the meaning given above.

**Table 5**

| Demonstrative compositions comprising a secondary cross-linker (D) with a furoic acid salt and methylenes donor (D1), in the absence of other cross-linking systems | | | |
|---|---|---|---|
| Step of addition | Ingredient | Ex. 12 INV | Ex. 13 INV |
| 1 | E-SBR 1723 | 100.00 (135.00) | 100.00 (135.00) |
| 1 | 6PPD | 1.00 | 1.00 |
| 1 | N550 | 40.00 | 40.00 |
| 1 | TDAE | 5.00 | 5.00 |
| 1 | Sodium furoate | 4.00 | 4.00 |
| 2 | HMMM | 6.00 | --- |
| 2 | HMT | --- | 3.00 |
| | Total | 191.00 | 188.00 |

wherein the other ingredients have the meaning given above.

The elastomeric compounds were prepared starting from the corresponding elastomeric compositions shown in Tables 1 - 5 according to the following process. The mixing of the components was carried out in two steps using an internal mixer (Banbury, Intermix or Brabender).

In the first step (1) all the ingredients were introduced with the exception of the vulcanisers, accelerants and the methylenes donor agent (D1). The mixing was continued for a maximum time of 5 minutes, reaching a temperature of approximately 145 °C. Subsequently, in the second step (2), again carried out using an internal mixer, the vulcanisers, accelerants and the methylenes donor agent (D1) were added, if present, and the mixing was continued for about 4 minutes, maintaining the temperature below 100 °C. The compounds were then discharged. After cooling and at least 12 hours from preparation, some samples of the compounds were vulcanised in a press at 170 °C for 10 min to give the specimens useful for mechanical characterisations.

### Characterisation of the compounds

The demonstrative elastomeric compounds comprising the cross-linking system of the invention but without the sulphur vulcaniser and vulcanisation additives of Examples 1, 2, 12 and 13, were subjected to the MDR rheometric analysis described above. The respective vulcanisation curves with the torque values S' as the cross-linking proceeds are shown in Figures 2, 3 and 4.

From the vulcanisation curves shown in the figures it could be appreciated how the furoic acid and its derivatives, even in the absence of vulcanisers, actually reacted with the methylenes donor agent (D1), leading to a growth of the torque (S') over time, at the usual vulcanisation temperatures.

The compounds with furoic acid, its sodium salt and its ester all showed the same trend of the increasing curve, in its initial section.

Furoic acid, if used in association with HMT as a methylenes donor, in the MDR curve tended to cause the compound to reach a plateau and then go into a slight reversion.

The hardness, density, rheometric, mechanical (static and dynamic) and adhesion performances of the comparative and inventive elastomeric compounds for tires, of Examples 3 - 11, measured with the methods described above, are reported in the following Tables 6 - 8:

**Table 6**

| | | Ex. 3 COMP | Ex. 4 COMP | Ex. 5 INV |
|---|---|---|---|---|
| Secondary cross-linking agent | | HMMM | HMMM + resorcinol | HMMM + furoic acid |
| MDR (30 min, 170 °C) | ML [dN m] | 2.47 | 2.85 | 2.59 |
| | MH [dN m] | 23.01 | 29.76 | 29.53 |
| | TS1 [min] | 0.80 | 0.71 | 0.79 |
| | TS2 [min] | 1.03 | 0.91 | 1.04 |
| | T05 [min] | 0.81 | 0.79 | 0.89 |
| | T30 [min] | 1.54 | 1.5 | 1.84 |
| | T60 [min] | 2.37 | 2.28 | 2.62 |
| | T90 [min] | 4.38 | 4.16 | 4.19 |
| | T95 [min] | 5.19 | 5.00 | 4.80 |
| | T100 [min] | 7.95 | 7.42 | 6.59 |
| Density | Density [g/cm³] | 1.172 | 1.178 | 1.176 |
| Ring tensile test (23 °C, average over 3 rings) | CA05 [MPa] | 1.99 | 2.42 | 2.49 |
| | CA1 [MPa] | 3.67 | 4.41 | 4.59 |
| | CA3 [MPa] | 14.68 | 17.15 | 17.03 |
| | CR [MPa] | 20.43 | 20.14 | 19.32 |
| | AR [%] | 434.36 | 373.07 | 363.7 |
| IRHD hardness (23 °C) | Hardness [IRHD] | 73.9 | 79.3 | 81.4 |
| E' 23 °C 10Hz | E' [MPa] | 9.21 | 11.65 | 11.83 |
| Tan D 23 °C 10Hz | -- | 0.136 | 0.147 | 0.141 |

From the data reported in Table 6, a substantial similarity could be observed for the properties of the compounds of Ex. 4 (comparative), comprising the conventional resorcinol - methylenes donor cross-linking system and Ex. 5 (invention) in which furoic acid replaced resorcinol, both in terms of hardening kinetics and in terms of final properties of the vulcanised compound. The compound according to the invention of Ex. 5 showed in particular comparable static mechanical properties, improved dynamics (E', tan D) and a higher hardness than the compound with the conventional resorcinol - methylenes donor system of Ex. 4.

In the absence of the methylenes acceptor and therefore of a secondary lattice, as in the compound of Ex. 3 (comparative), a significant decrease in both static and dynamic mechanical properties was observed.

**Table 7**

| | | Ex. 6 COMP | Ex. 7 COMP | Ex. 8 INV |
|---|---|---|---|---|
| Secondary cross-linking agent | | HMMM | HMMM + resorcinol | HMMM + furoic acid |
| MDR (30 min, 170 °C) | ML [dN m] | 2.2 | 2.15 | 2.2 |
| | MH [dN m] | 23.55 | 31.23 | 25.17 |
| | TS1 [min] | 0.77 | 0.74 | 0.73 |
| | TS2 [min] | 1.19 | 1.04 | 1.05 |
| | T05 [min] | 0.8 | 0.89 | 0.78 |
| | T30 [min] | 2.14 | 1.77 | 1.98 |
| | T60 [min] | 2.83 | 2.38 | 2.79 |
| | T90 [min] | 4.4 | 3.78 | 4.34 |
| | T95 [min] | 5.05 | 4.33 | 4.91 |
| | T100 [min] | 7.31 | 6.19 | 6.76 |
| Density | Density [g/cm³] | 1.147 | 1.146 | 1.148 |
| Ring tensile test (23 °C, average over 3 rings) | CA05 [MPa] | 1.42 | 1.78 | 1.78 |
| | CA1 [MPa] | 2.46 | 3.07 | 3.11 |
| | CA3 [MPa] | 11.38 | 14.03 | 13.51 |
| | CR [MPa] | 21.34 | 20.43 | 21.65 |
| | AR [%] | 510.43 | 432.17 | 464.06 |
| IRHD hardness (23 °C) | Hardness [IRHD] | 73.5 | 77.5 | 77.8 |
| E' 23 °C 10Hz | E' [MPa] | 7.223 | 8.704 | 8.507 |
| Tan D 23°C 10Hz | - - | 0.141 | 0.131 | 0.139 |

| Adhesion test | | | | |
|---|---|---|---|---|
| Nylon cords (1400x2, 27x27) | Maximum force [N] | 122.94 | 181.13 | 177.45 |
| PET cords (1670x2, 33x33) | Maximum force [N] | nd | 213.48 | 176.86 |
| Aramid cords (1670x2, 42x42) | Maximum force [N] | nd | 173.3 | 158.29 |

Wherein nd: not detected

From the data reported in Table 7, a substantial similarity could be observed for the properties of the compounds of Ex. 7 (comparative), comprising the conventional resorcinol - methylenes donor cross-linking system and Ex. 8 (invention) in which furoic acid replaced resorcinol, both in terms of hardening kinetics and in terms of final properties of the vulcanised compound.

The compound according to the invention of Ex. 8 showed in particular improved static mechanical properties (CR, AR%) and comparable dynamic (E', tan D) properties and a slightly higher hardness than the compound with the conventional resorcinol - methylenes donor system of Ex. 7.

In the absence of the methylenes acceptor and therefore of a secondary lattice, as in the compound of Ex. 6 (comparative), a significant decrease in hardness and modulus E' was instead observed.

As regards the adhesion to textile cords, the test showed values of maximum strength only slightly lower for the compound according to the invention of Ex. 8 compared to the very high values of the comparative compound of Ex. 7 comprising the conventional reference resorcinol - methylenes donor cross-linking system. The slight decrease in adhesion observed by replacing resorcinol with furoic acid appeared to be completely negligible considering that, in the absence of secondary cross-linking, the adhesion force between the cords and the elastomeric compound collapsed, as evidenced by the maximum force value measured in the test with the nylon cords of Ex. 6 (122.94 N) compared to the very close values of the comparative Ex. 7 (181.13 N with the resorcinol - methylenes donor system) and Ex. 8 of the invention (177.45 N).

This decrease did not affect the applicability of the new cross-linking system of the invention and appeared to be completely acceptable from the technological point of view in view of the negligible toxicity and the better eco-compatibility of the furoic acid of the present cross-linking system with respect to the resorcinol of the conventional systems.

**Table 8**

| | | Ex. 9 COMP | Ex. 10 INV | Ex. 11 INV |
|---|---|---|---|---|
| Secondary cross-linking agent | | HMMM + resorcinol | HMMM + sodium furoate | HMMM + ethyl furoate |
| MDR (30 min, 170 °C) | ML [dN m] | 2.22 | 2.12 | 2.15 |
| | MH [dN m] | 30.78 | 24.2 | 23.41 |
| | TS1 [min] | 0.61 | 0.88 | 0.73 |
| | TS2 [min] | 0.86 | 1.32 | 1.13 |
| | T05 [min] | 0.72 | 0.93 | 0.75 |
| | T30 [min] | 1.71 | 1.98 | 2.01 |
| | T60 [min] | 2.32 | 2.67 | 2.7 |
| | T90 [min] | 3.76 | 4.32 | 4.3 |
| | T95 [min] | 4.36 | 4.99 | 4.96 |
| | T100 [min] | 6.3 | 7.15 | 7.05 |
| Density | Density [g/cm³] | 1.147 | 1.148 | 1.145 |
| Ring tensile test (23 °C, average over 3 rings) | CA05 [MPa] | 1.79 | 1.58 | 1.41 |
| | CA1 [MPa] | 3.07 | 2.69 | 2.42 |
| | CA3 [MPa] | 13.67 | 11.77 | 11.05 |
| | CR [MPa] | 22.37 | 21.72 | 22.13 |
| | AR [%] | 468.74 | 505.75 | 531.35 |
| IRHD HARDNESS (23 °C) | Hardness [IRHD] | 79 | 75.7 | 73.8 |
| E' 23 °C 10Hz | E' [MPa] | 9.00 | 7.80 | 6.67 |
| Tan D 23°C 10Hz | -- | 0.140 | 0.144 | 0.130 |

| Adhesion test | | | | |
|---|---|---|---|---|
| Nylon cords (1400x2, 27x27) | Maximum force [N] | 174 | 142 | 153 |
| PET cords (1670x2, 33x33) | Maximum force [N] | 137 | 139 | 141 |
| Aramid cords (1670x2, 42x42) | Maximum force [N] | 134 | 112 | 122 |

From the data reported in Table 8, for the compounds of Examples 10 and 11 (invention), in which sodium furoate and ethyl furoate respectively replaced resorcinol, it was possible to observe a slowing down of the cross-linking kinetics and a lower contribution to reinforcement, with lower hardness and modulus than those of the compound of Ex. 9 (comparative), comprising the conventional resorcinol - methylenes donor cross-linking system or with respect to the system of the invention comprising furoic acid (see Table 7).

From these evidences, the systems comprising derivatives of furoic acid appeared to be less reactive as secondary cross-linkers than both the conventional resorcinol - methylenes donor system and that of the invention comprising furoic acid.

Nevertheless, the results of the adhesion test were maintained at the level of the formulations with furoic acid, showing a similar ability of adhesion of the adhesive to the cords.

It followed that these compositions according to the invention, comprising the derivatives of furoic acid (salts or esters), could find use in those cases in which good adhesion to the reinforcing elements had to be provided without necessarily providing reinforcement or high modulus to the compound, for example in compounds for carcass rubberizing, compounds for belt structure, in particular compounds for belt layer at zero degrees.

It should be noted that, in the particular case of PET cords, the cross-linking system (D) according to the invention even exceeded the adhesion performance of the conventional resorcinol - methylenes donor system, becoming an excellent substitute for it, even more adhesive, eco-sustainable and with reduced toxicity.

## Claims

1. Composition for tire compounds comprising at least
- 100 phr of at least one diene elastomeric polymer (A),
- at least 0.1 phr of at least a reinforcing filler (B),
- from 0.1 to 20 phr of a vulcanising agent (C),
- at least 0.1 phr of a secondary cross-linking system (D) which comprises at least one methylenes donor agent (D1) and at least one methylenes acceptor agent (D2) selected from furoic acid, its esters or its salts.

2. The composition according to claim 1, comprising at least 0.5 phr, 0.8 phr or 1 phr of at least a vulcanising agent (C), preferably selected from sulphur-based vulcanising agents.

3. The composition according to claim 1 or 2, comprising from 0.5 to 15 phr, preferably from 0.5 to 10 phr of said methylenes donor agent (D1).

4. The composition according to any one of claims 1 to 3, wherein said salts of furoic acid (D2) are selected from alkaline or alkaline earth inorganic salts, organic salts, and their mixtures, preferably are selected from sodium furoate, potassium furoate, zinc furoate, calcium furoate and quaternary ammonium furoate.

5. The composition according to any one of claims 1 to 3, wherein said esters of furoic acid (D2) are selected from C₁ - C₁₈ alkyl esters, preferably from C₁ - C₅ alkyl esters.

6. The composition according to any one of the preceding claims, comprising from 0.5 to 15 phr, preferably from 0.5 to 10 phr, of said methylenes acceptor agent (D2).

7. The composition according to any one of the preceding claims, wherein said methylenes donor agent (D1) is selected from hexamethylenetetramine (HMT), hexamethoxymethylmelamine (HMMM), hexamethylol melamine, N,N'-dimethylolurea, N-methylol dicyanamide, N-allyl dioxazine, N-phenyl dioxazine, N-methylol-acetamide, N-methylol-butyramide, N-methylol-acrylamide, N-methylol-succinimide, lauryloxymethylpyridinium chloride, ethoxymethylpyridinium chloride, trioxanehexamethoxymethylmelamine, and hexamethylolmelamine pentamethyl ether (HMPE).

8. The composition according to any one of the preceding claims, wherein the methylene donor agent (D1) and the furoic acid, its salts or its esters (D2), are in a weight ratio comprised between 1:0.1 and 1:10, preferably between 1:0.5 and 1:5.

9. Green or, at least partially, cross-linked elastomeric compound for tires, obtained by mixing and possibly vulcanising, at least partially, the elastomeric composition according to any one of claims 1 to 8, wherein the term "green" means not yet cross-linked.

10. The elastomeric compound according to claim 9 as a rubberizing compound of reinforcing elements, preferably as a rubberizing compound of reinforcing elements made of polyamides, polyester or cellulose derivatives, more preferably as a rubberizing compound of reinforcing elements made of polyethylene terephthalate.

11. Component of a tire for vehicle wheels comprising, or preferably consisting of a green or at least partially cross-linked elastomeric compound according to any one of claims 9 or 10.

12. The component of a tire according to claim 11, comprising reinforcing elements preferably consisting of one or more materials selected from polyamides, polyesters and cellulose derivatives.

13. The tire component according to claim 11 or 12 selected from carcass structure, belt structure and protection layers (chafer) or reinforcing layers (flipper) of the bead.

14. Tire for vehicle wheels comprising at least one component of tire according to any one of claims 11 to 13.

15. The tire according to claim 14 wherein said component is an unreinforced component selected from under-layer, sheet, sidewall and tread band.

## Patentansprüche

1. Zusammensetzung für Reifenmischungen, umfassend mindestens
- 100 phr mindestens eines elastomeren Dienpolymers (A),
- mindestens 0,1 phr mindestens eines verstärkenden Füllstoffs (B),
- 0,1 bis 20 phr eines Vulkanisationsmittels (C),
- mindestens 0,1 phr eines sekundären Vernetzungssystems (D), das mindestens ein Methylendonormittel (D1) und mindestens ein Methylenakzeptormittel (D2), ausgewählt aus Furansäure, deren Estern oder deren Salzen, umfasst.

2. Zusammensetzung nach Anspruch 1, umfassend mindestens 0,5 phr, 0,8 phr oder 1 phr mindestens eines Vulkanisationsmittels (C), vorzugsweise ausgewählt aus Vulkanisationsmitteln auf Schwefelbasis.

3. Zusammensetzung nach Anspruch 1 oder 2, umfassend 0,5 bis 15 phr, vorzugsweise 0,5 bis 10 phr des Methylendonormittels (D1).

4. Zusammensetzung nach einem der Ansprüche 1 bis 3, wobei die Salze der Furansäure (D2) ausgewählt sind aus anorganischen Alkali- oder Erdalkalisalzen, organischen Salzen und deren Mischungen, vorzugsweise ausgewählt aus Natriumfuroat, Kaliumfuroat, Zinkfuroat, Calciumfuroat und quaternärem Ammoniumfuroat.

5. Zusammensetzung nach einem der Ansprüche 1 bis 3, wobei die Ester der Furansäure (D2) ausgewählt sind aus C₁-C₁₈-Alkylestern, vorzugsweise aus C₁-C₅-Alkylestern.

6. Zusammensetzung nach einem der vorstehenden Ansprüche, umfassend 0,5 bis 15 phr, vorzugsweise 0,5 bis 10 phr des Methylenakzeptormittels (D2).

7. Zusammensetzung nach einem der vorstehenden Ansprüche, wobei das Methylendonormittel (D1) ausgewählt ist aus Hexamethylentetramin (HMT), Hexamethoxymethylmelamin (HMMM), Hexamethylolmelamin, N,N'-Dimethylolharnstoff, N-Methyloldicyanamid, N-Allyldioxazin, N-Phenyldioxazin, N-Methylolacetamid, N-Methylolbutyramid, N-Methylolacrylamid, N-Methylolsuccinimid, Lauryloxymethylpyridiniumchlorid, Ethoxymethylpyridiniumchlorid, Trioxanhexamethoxymethylmelamin und Hexamethylolmelamin-Pentamethylether (HMPE).

8. Zusammensetzung nach einem der vorstehenden Ansprüche, wobei das Methylendonormittel (D1) und die Furansäure, deren Salze oder deren Ester (D2) in einem Gewichtsverhältnis zwischen 1:0,1 und 1:10, vorzugsweise zwischen 1:0,5 und 1:5 stehen.

9. Unvulkanisierte oder mindestens teilweise vernetzte Elastomerverbindung für Reifen, die durch mindestens teilweises Mischen und möglicherweise Vulkanisieren der Elastomerzusammensetzung nach einem der Ansprüche 1 bis 8 erhalten wird, wobei der Begriff "unvulkanisiert" noch nicht vernetzt bedeutet.

10. Elastomerverbindung nach Anspruch 9 als eine Gummierungsverbindung von Verstärkungselementen, vorzugsweise als eine Gummierungsverbindung von Verstärkungselementen, die aus Polyamiden, Polyester oder Cellulosederivaten hergestellt sind, bevorzugter als eine Gummierungsverbindung von Verstärkungselementen, die aus Polyethylenterephthalat hergestellt sind.

11. Komponente eines Reifens für Fahrzeugräder, die eine unvulkanisierte oder mindestens teilweise vernetzte Elastomerverbindung nach einem der Ansprüche 9 oder 10 umfasst oder vorzugsweise aus dieser besteht.

12. Komponente eines Reifens nach Anspruch 11, umfassend Verstärkungselemente, die vorzugsweise aus einem oder mehreren Materialien bestehen, die ausgewählt sind aus Polyamiden, Polyestern und Cellulosederivaten.

13. Reifenkomponente nach Anspruch 11 oder 12, die ausgewählt ist aus einer Karkassenstruktur, einer Gürtelstruktur und Schutzschichten (Chafer) oder Verstärkungsschichten (Flipper) des Wulstes.

14. Reifen für Fahrzeugräder, umfassend mindestens eine Komponente eines Reifens nach einem der Ansprüche 11 bis 13.

15. Reifen nach Anspruch 14, wobei die Komponente eine unverstärkte Komponente ist, die aus einer Unterschicht, einer Scheibe, einer Seitenwand und einem Laufflächenband ausgewählt ist.

## Revendications

1. Composition pour composés de pneus comprenant au moins
- 100 pce d'au moins un polymère élastomère diénique (A),
- au moins 0,1 pce d'au moins une charge de renforcement (B),
- de 0,1 à 20 pce d'un agent de vulcanisation (C),
- au moins 0,1 pce d'un système de réticulation secondaire (D) qui comprend au moins un agent donneur de méthylènes (D1) et au moins un agent accepteur de méthylènes (D2) choisi parmi l'acide furoïque, ses esters ou ses sels.

2. Composition selon la revendication 1, comprenant au moins 0,5 pce, 0,8 pce ou 1 pce d'au moins un agent de vulcanisation (C), de préférence choisi parmi les agents de vulcanisation à base de soufre.

3. Composition selon la revendication 1 ou 2, comprenant de 0,5 à 15 pce, de préférence de 0,5 à 10 pce dudit agent donneur de méthylènes (D1).

4. Composition selon l'une quelconque des revendications 1 à 3, dans laquelle lesdits sels d'acide furoïque (D2) sont choisis parmi les sels inorganiques alcalins ou alcalino-terreux, les sels organiques, et leurs mélanges, sont choisis de préférence parmi le furoate de sodium, le furoate de potassium, le furoate de zinc, le furoate de calcium et le furoate d'ammonium quaternaire.

5. Composition selon l'une quelconque des revendications 1 à 3, dans laquelle lesdits esters d'acide furoïque (D2) sont choisis parmi les esters d'alkyle en C₁-C₁₈, de préférence parmi les esters d'alkyle en C₁-C₅.

6. Composition selon l'une quelconque des revendications précédentes, comprenant de 0,5 à 15 pce, de préférence de 0,5 à 10 pce, dudit agent accepteur de méthylènes (D2).

7. Composition selon l'une quelconque des revendications précédentes, dans laquelle ledit agent donneur de méthylènes (D1) est choisi parmi l'hexaméthylènetétramine (HMT), l'hexaméthoxyméthylmélamine (HMMM), l'hexaméthylolmélamine, le N,N'-diméthylolurée, le N-méthylol dicyanamide, le N-allyl dioxazine, le N-phényl dioxazine, le N-méthylol-acétamide, le N-méthylol-butyramide, le N-méthylol-acrylamide, le N-méthylol-succinimide, le chlorure de lauryloxyméthylpyridinium, le chlorure d'éthoxyméthylpyridinium, la trioxane-hexaméthoxyméthylmélamine et l'éther pentaméthylique d'hexaméthylolmélamine (HMPE).

8. Composition selon l'une quelconque des revendications précédentes, dans laquelle l'agent donneur de méthylènes (D1) et l'acide furoïque, ses sels ou ses esters (D2), sont dans un rapport pondéral compris entre 1:0,1 et 1:10, de préférence entre 1:0,5 et 1:5.

9. Composé élastomère vert ou au moins partiellement réticulé pour pneus, obtenu par mélange et éventuellement vulcanisation au moins partielle de la composition élastomère selon l'une quelconque des revendications 1 à 8, dans lequel le terme « vert » signifie non encore réticulé.

10. Composé élastomère selon la revendication 9, en tant que composé caoutchoutant d'éléments de renforcement, de préférence en tant que composé caoutchoutant d'éléments de renforcement en polyamides, polyester ou dérivés de cellulose, plus préférentiellement en tant que composé caoutchoutant d'éléments de renforcement en polyéthylène téréphtalate.

11. Composant d'un pneu pour roues de véhicule comprenant, ou de préférence consistant en un composé élastomère vert ou au moins partiellement réticulé selon l'une quelconque des revendications 9 ou 10.

12. Composant d'un pneu selon la revendication 11, comprenant des éléments de renforcement consistant de préférence en un ou plusieurs matériaux choisis parmi les polyamides, les polyesters et les dérivés de cellulose.

13. Composant de pneu selon la revendication 11 ou 12 choisi parmi la structure de carcasse, la structure de ceinture et les couches de protection (bandelette talon) ou les couches de renforcement (languette) du talon.

14. Pneu pour roues de véhicule comprenant au moins un composant de pneu selon l'une quelconque des revendications 11 à 13.

15. Pneu selon la revendication 14, dans lequel ledit composant est un composant non renforcé choisi parmi une sous-couche, une feuille, une paroi latérale et une bande de roulement.
